Europäisches Patentamt

European Patent Office

Office européen des brevets

(11) Publication number: **0 512 484 A1**

# EUROPEAN PATENT APPLICATION

(21) Application number: 92107594.1

(51) Int. Cl.5: **G01D 5/14**

(22) Date of filing: **05.05.92**

(30) Priority: **06.05.91 IT MI911220**

(43) Date of publication of application:
**11.11.92 Bulletin  92/46**

(84) Designated Contracting States:
**CH DE ES FR GB IT LI SE**

(71) Applicant: **E9 ELETTRONICA S.r.l.**
**Via Milano 15**
**I-22059 Robbiate (Co)(IT)**
Applicant: **ARTHYS S.r.l.**
**Via L. Manara 4**
**I-20059 Vimercate (Mi)(IT)**

(72) Inventor: **Giampiero, Ferraris**
**Via Rossini 17**
**I-22068 Monticello Brianza (CO)(IT)**

(54) **Method and device to transduce and detect displacements by measuring the magnetic field linked to plane conductive lines carrying electrical current.**

(57)  Method to transduce and detect mechanical displacements, in which the magnetic field to be measured is linked to a plane conductive line carrying electrical current (SP1,SP2), and the displacements to be measured, directly or through a suitable mechanical joint, are transduced in spatial relative positions between a magnetic-sensitive device (D1, D2) and the said plane conductive line generating it. The magnitude of the magnetic field in each measured position depends on the shape of the linked plane conductive line, particularly on its width, embodied by metallic field. The variation of the plane conductive line shape can be determined following up the outline of the mechanical displacements to be measured.

Fig.8

The present invention relates to methods for measuring mechanical displacements and more precisely to a method and device to transduce and detect displacements through the measure of the magnetic field linked to a plane conductive line carrying electrical current.

As it is known analog electronic transducers of mechanical displacements can be grouped in two principal categories: a) transducers with mechanical sliding cursor; b) transducers with non-contact cursor.

The first category typically relates to the potentiometer transducers (rheostats) on which a cursor slides on a resistive element whose length and resistive value are a calculated function of the displacement to be measured. The resistive element can be a helically wound wire or, as more recently developed, a film deposed on a insulating substrate using thin or thick film technologies; this film can be a metallic film or a polymeric conductor.

Anyway the shape and the dimensions of the film need to be so designed that the resistance value measured between the input contact of the resistive film and the contact point of the sliding cursor is proportional to the displacement to be measured for each cursor position.

It is obvious, independently of the technologies used to realize the resistive elements, that these types of tranducers are heavily affected by the mutual rubbing wear between the sliding contact and the body of the resistive element, also because, to be sure of having a good electrical connection, generally the cursor is forced by a spring on the surface of the resistive element. As a consequence the problems during the life of such a kind of transducers are:

contact-resistance increment between cursor and resistive element, open circuit of the resistive film, corrosion fatigue in the positions where the cursor is most frequently standing, and some other defects.

From the previously mentioned problems we know that it is necessary to obtain an output proportional to the displacement to be measured, without sliding mechanical contact, using tranducers of the second category b), namely using physical phenomena and electrical or electronic properties different from electrical resistivity.

Many types of category b) transducers are already known, e.g. variable capacity or reluctance transducers, optical, magnetic transducers etc., each having its own manufacturing cost, reliability difficulties.

As an example the capacity transducers need hermetic sealed packages, to avoid changes of the dielectric constant in humidity environment, and sophisticated electronic circuits to detect small differences in the measured capacitance values. The inductive transducers, based for instance on variable differential transformers, need accurate and precise mechanical assemblies. Optical transducers are too expensive and present difficulties in manufacturing some optical parts and components.

Concerning magnetic transducers, now are available microdevices able to measure constant magnetic field as well as magnetic-field variations, with a near punctual spatial resolution and an output proportional to the field magnitude to be measured; these devices are based on the magnetoresistive effect or on the Hall effect, or on the Faraday effect, namely the rotation of the light beam in an optical fiber in presence of a magnetic field. Transducers of linear or angular displacements or rotations have been realised using permanent magnets or ferrous gear wheels to generate counting pulses, etc.

All the above embodiments, in which ferromagnetic materials are used to generate magnetic fields to be measured, show problems relating to reproducibility of the permanent magnets, to the temperature sensitivity, to the long term stability of the magnetic field, to the effects of the residual magnetization, even if the best ferromagnetic materials are used.

The specific purpose of present invention is to overcome the drawbacks of known magnetic displacement transducers, expecially connected to the difficulties to obtain stable magnetic field using permanent magnets, and to suggest a new method to transduce and detect mechanical displacements, in which the magnetic field to be measured is linked to a plane conductive line carrying electrical current, and the displacements to be measured, directly or through a suitable mechanical joint, are transduced in spatial relative positions between a magnetic-sensitive device and the said plane conductive line generating it.

The magnitude of the magnetic field in each measured position depends on the shape of the linked plane conductive line, particularly on its width, embodied by metallic field. The variation of the plane conductive line shape can be determined following up the outline of the mechanical displacements to be measured.

The electrical current can be supplied to the plane conductive line through electrical conducting wires or by electric induction.

It is specific object of the present invention a method to transduce and detect mechanical input displacements measuring the magnitude of the magnetic field as described in claims from 1 to 4.

It is also object of the present invention a device that realizes such a method, consisting of a transducer for measuring by preference, but not exclusively, angular displacements, composed of one or more spiral conductive lines carrying electrical current. The spirals are metallic film etched in epicycloidal shape, and generate a magnetic field measured by a magnetic-sensitive device. The magnetic-sensitive device works as a non-contact cursor in circular path relative motion to the metallic spiral central axis.

The electrical current can be supplied to the spiral plane conductive lines through electrical conducting wires or inductance coils. The inductance coils can operate also as magnetic sensitive devices.

The device is able to give performances similar to those of the resistive potentiometer transducers, has low production cost and solves the mentioned problems of the sliding cursor as well as some other typical problems of film rheostat, like film resistive value trimming and the connected linearization of the output signal of each single transducer, and, as previously said, without the problems caused by the sliding cursor on the resistive film.

It is also specific object of the invention a device to transduce and detect displacements by measuring magnetic fields, as described in all the variations of claims from 5 to 14.

By means of such a device it is possible to embody sensors of linear or angular displacement, pressure, expansion, level, temperate, humidity, flow, acceleration, etc., in general in all the cases in which it is anyway possible to transduce, using mechanical means substantially known, the magnitude to be measured into a linear or angular displacement, directly measurable by the device subject of the present invention.

In addition by carefully changing the width of the spiral film lines, it is possible to match also displacements having non linear behaviour. That means in general that by shaping the planar film lines, it is possible to create a variation in the linked magnetic field following up the outline of any specific movement law.

Further scopes and advantages of the present invention will become clear from the following detailed description, first of the method and then of examples of realisation thereof, and from the annexed drawings, given as an explanatory and non limitative example, in which:

- in figs. 1 to 3 are illustrated a generic planar film conductive line and respectively the behaviour of the perpendicular and transversal component of the linked magnetic field, detected by a sensor probe moving in a direction perpendicular to the conductive line;
- in fig. 4 is illustrated a conductive spiral planar epicycloidal line and the relative field (vertical component) behaviour;
- in figs. 5 and 6 are in evidence the epicycloidal spiral and respectively the behaviour of the transverse component of the linked magnetic field, during a revolving displacement of the spiral on its central axis;
- in fig. 7 is shown an application with two magnetic sensor probes which rotate the one versus the other around the spiral central axis;
- in fig. 8 is shown an application with two specular spiral lines back to back, with current flowing in opposite directions in the two spiral lines, and with the sensor probes each faced to a spiral line;
- in fig. 9 is shown the behaviour of the linked magnetic field transverse component obtained in the cases of figs. 7 and 8 and also of the following fig. 10 as a function of the angular position of the spiral lines;
- in fig. 10 is shown, as an example, a realization of the device subject of the present invention;
- in fig. 11 is shown a variation of realization of the device subject of the present invention.

The method of the invention will next be described with reference to the successive steps of theoretical and experimental characterization and to the figures from 1 to 9.

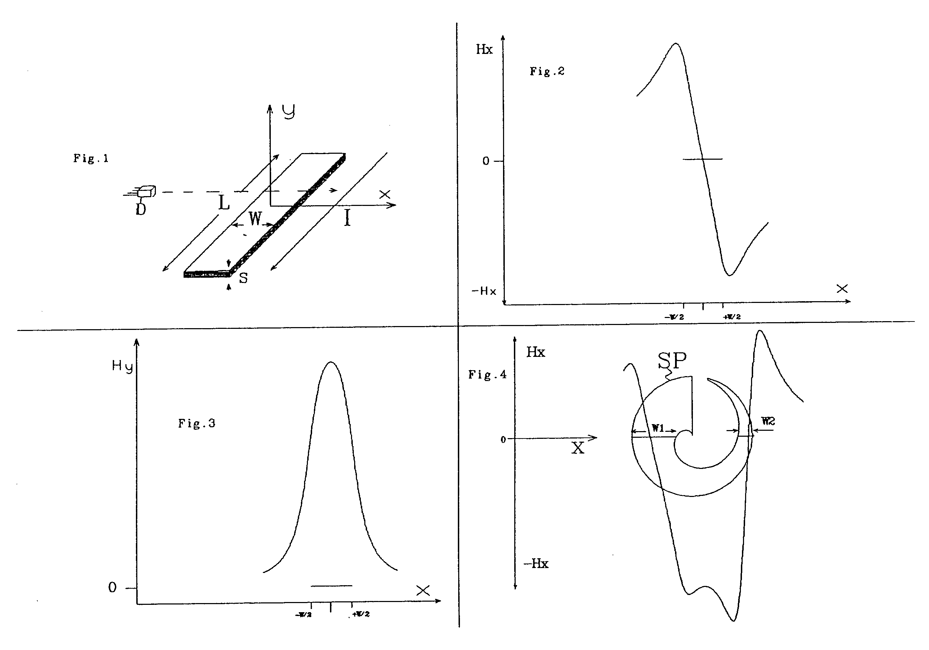

In the first step there has been characterized, both theoretically and experimentally, the behaviour of the magnetic field **H** linked to a plane film conductive line carrying electrical current; namely, with reference to fig. 1, the film line, for example, etched on an insulated substrate, has the lenght L greater than the whidt W, and the thickness S negligible in respect of the previous two dimensions L,W.

The measurements of the linked magnetic field were performed using as probe a commercial magnetic sensitive device based on magneto-resistive effect or Hall effect, indicated by D in fig. 1; the linked magnetic field is scanned moving the probe at constant height from the substrate plane in micrometric step across the line width, transversal to the line length L, or else to the direction of the electrical current carried by the film line.

Both theory (Laplace formulas) and experimental measurements give for the perpendicular Hy and parallel (in the same displacement direction as D) Hx component of the linked magnetic field, a behaviour like those shown respectively in figs. 2 and 3: the magnitude of the measured field components is obviously function of the current intensity I flowing in the conductive film, of the distance y of the scanning probe from the substrate surface and of the line width W.

It is possible to demonstrate that the magnitude of the total magnetic field Ho linked to a plane conductive line, carrying the electrical current intensity I, can be calculated in any point P(x,y) where the probe D is located, from the formula:

$$Ho = \frac{4I}{\sqrt{(W/2-x)^2 + y^2} + \sqrt{(W/2+x)^2 + y^2}} \cdot f(W,x,y)$$

where f(W,x,y) is a function tending to 1 for W tending to 0.

It is important to observe, with reference to fig. 2, that the magnitude of the magnetic field parallel component Hx has a linear behaviour with the width, as long as the mesuring probe D scans the vertical direction over the line width; the measured values are symmetrical with respect to the centre of the film width and, for constant current intensity values I, the difference between their maximum and minimum values is dependent from the film width W, as is resulting from the previous formula.

As a consequence it is possible to obtain a linear output signal from the relative displacement between the measuring magnetic probe D and the plane line in the interval of its width W.

Circuitry and manufacture requirements force to etch the plane conductive line on small dimension substrates keeping its ohmic value not too small; this means that is necessary to optimize the ratio L/W with the substrate dimensions. With reference to fig.4, these requirements can be fulfilled if the plane conductive line has the shape of a spiral SP.

When the spiral line canges its width W with continuity following a suitable mathematical law, like shown in fig.4, and the linked magnetic field is scanned along one direction pertaining to one spiral diameter, the perpendicular field component Hx follows the behaviour outlined in fig.4.

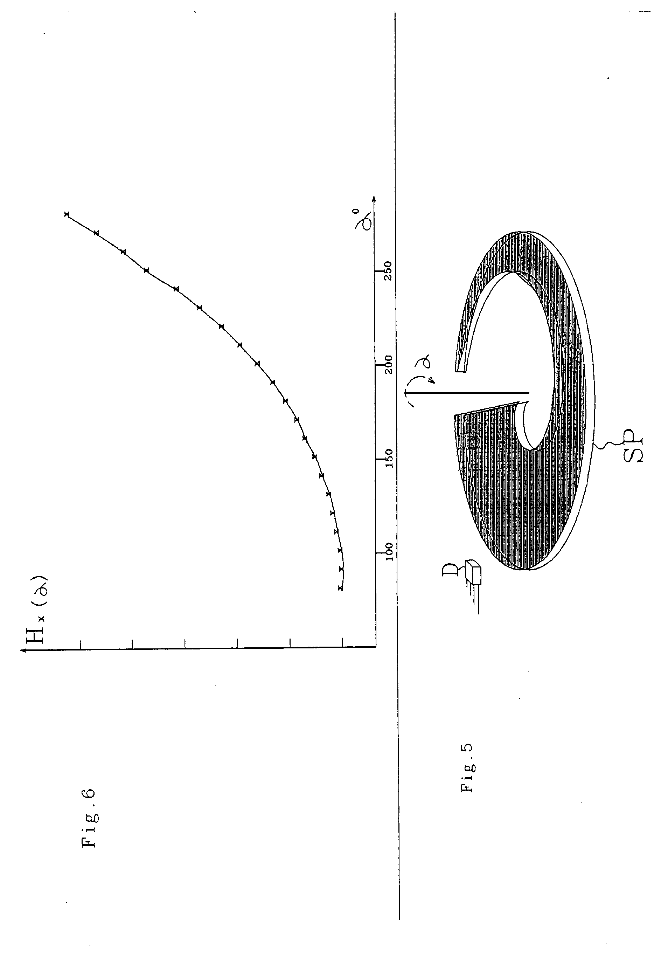

Then, with reference to fig. 5, when a spiral epicycloidal line SP, etched on an insulated substrate, changes its width W with continuity following the angular radial displacement $\alpha$ of a mesuring probe D, hinged to a journal through the spiral centre, the measured values of the perpendicular component Hx($\alpha$) of the linked magnetic field have the outline shown in fig. 6, function of the angle $\alpha$; the same result is obtained if the spiral SP is rotate on its central pivot respect a fixed probe D.

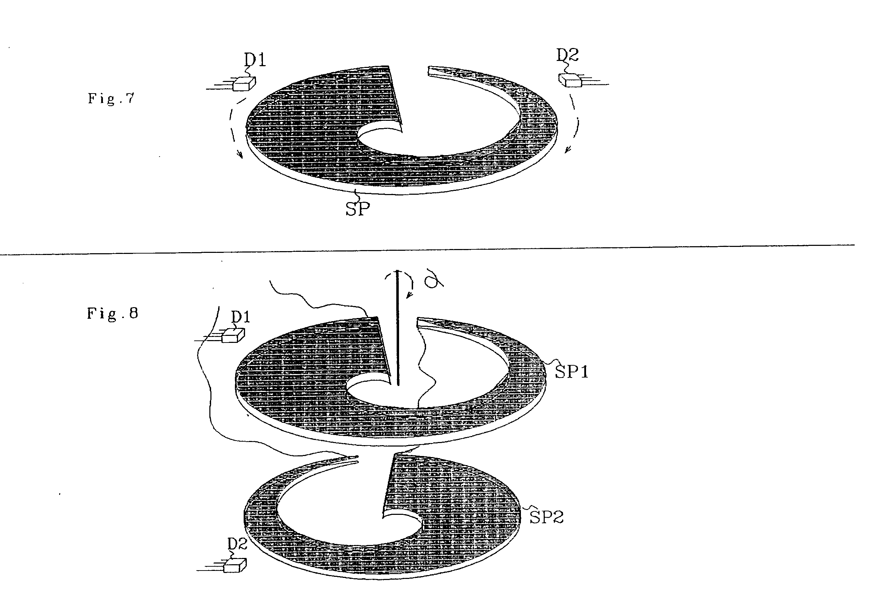

If, with reference to fig. 7, two magnetic probes D1, D2 are used hinged to the spiral centre, one rotating clockwise, the other counter clockwise,diametrically opposed in the start position, and if they are left to rotate, the one versus the other of the same angle, we obtain, from the measured components Hx of the linked magnetic field, an output difference signal which is linear with their angular displacement for an excursion of 180°.

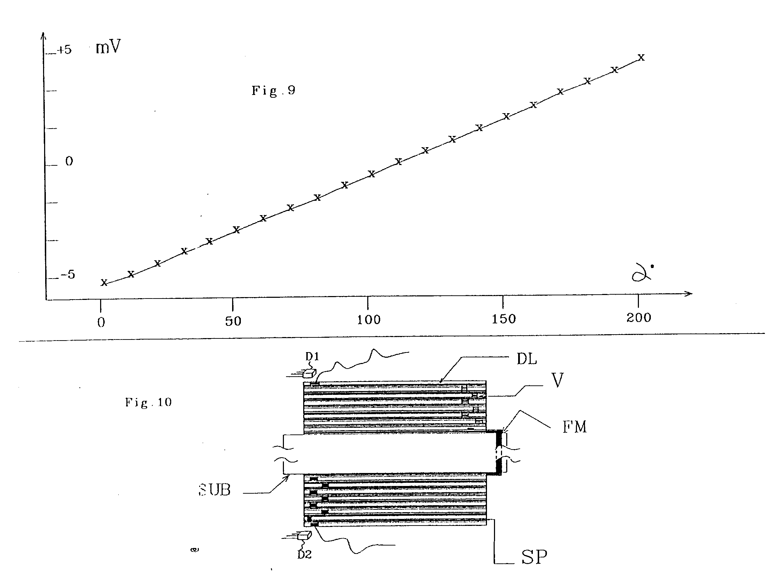

If, with reference to fig. 8, are used two specular spiral lines SP1, SP2 back to back, their electrical connection forcing the current to flow in the opposite direction in the two spirals, the output signal difference of the two measuring probes D1, D2, each in front of the respective spiral, has the same property of linearity with the angular displacement of the two spiral lines on their common central pivot; this configuration has sensible advantages: the two probes are insensible to the external magnetic fields, as they are close to each other and the effect of those external fields is eliminated by the fact that the final signal is the difference of the values measured by the two probes; the double spiral configuration present no selfinductance.

It is evident that, for an angular displacement less than a full turn, the presence of the wires, supplying the current to the spiral lines, is not a major obstacle to rotation of the spiral lines on their common central pivot.

Two practical difficulties were still limiting the realisation of an industrial transducer: low value variations of the measured linked magnetic field Hx($\alpha$), requiring the use of high sensitivity magnetic probes or the supply of high intensity current to the spiral lines; as a consequence an high amplification gain electronic circuit was necessary and the complete transducer was power consuming.

To solve both difficulties, as a first experimental step, we have realized, with reference to fig. 10, a multiple or multilayered spiral structure; in the top group of N/2 spirals the current was circulating clockwise and in the bottom group of N/2 specular spirals counterclockwise. By the multiplication of the simple configuration, previously described, we have increased the total resistive value of the spiral lines to better match the amplifier circuit; at the same time we have lowered the current intensity I supplied to the spiral lines and increased the magnitude of the linked magnetic field.

We have also observed that, as for many applications an high frequency response was not necessary, it was possible to use a pulsed intensity current I because the specular configuration cuts the selfinductance effect.

This multilayered structure has been realised using many substrate materials: alumina, ferrite, printed circuit board, etc., with excellent results; we can see, with reference to fig. 9, the resulting output signal difference of the voltage values measured by the two magneto-sensitive probes D1, D2 as a function of the angular displacement $\alpha$, in the non limitative example of: $I = 350$ mA, multilayer package of $8 + 8$ spiral lines, distance between probes and spiral top and bottom planes 0.5mm, external spirals diameter 22 mm, open circuit sensitivity for the magneto-sensitive devices used as probe 14 mV/kA/m.

For the conductive film the succesfully used materials were gold, aluminum, copper.

At this point we have realized the definitive structure that can be manufactured using all the possibilities offered by hybrid circuit and printed circuit technologies, like a multilayer package with internal integrated connections of conductive spiral lines SP, (dark lines), trough internal vias V as in evidence in fig. 10. The conductive spiral lines are separated by a dielectric layer DL (clear layer); the first group of N/2 top spiral lines have all the same shape and are series connected, the second group of N/2 bottom spiral lines have all the same shape, are series connected, but they are specular to the top group; the current is circulating in opposite directions. A metallized through hole FM allows the electrical connection between top and bottom surface of the substrate SUB, supporting and dividing the two spiral groups.

By means of the structure in evidence in fig. 10, it is possible to realize sensors to measure linear and angular displacements, pressure, elongation, level, temperature, umidity, flow, acceleration and other physical quantities; every time the system to be measured produces even quite small mechanics movement of known actuating component is possible to use the device object of the present invention to transduce this linear or angular movement into an electric signal.

In addition by carefully changing the width W of the spiral film lines shape, it is possible to match also displacements having non linear behaviour. As a general principle, it is possible to alter the spiral lines shape to obtain in the neighbouring space a linked magnetic field whose magnitude varies following up the outline of any specific movement law.

The magnetic field magnitude depends on the shape of the linking plane conductive line, in particular on its width W.

The change of the planar film shape can be determined following up the variation law of the quantity to be measured.

Numerous variants are possible to the realization described as an example in fig. 10, without exceeding the scope of the principles of the present inventive idea.

A primary variant has been successfully experimented to remove the conducting wires, by using the electromagnetic induction phenomenon to supply the electrical current to the spiral conductive line or to the multilayer spiral package described in the fig.10.

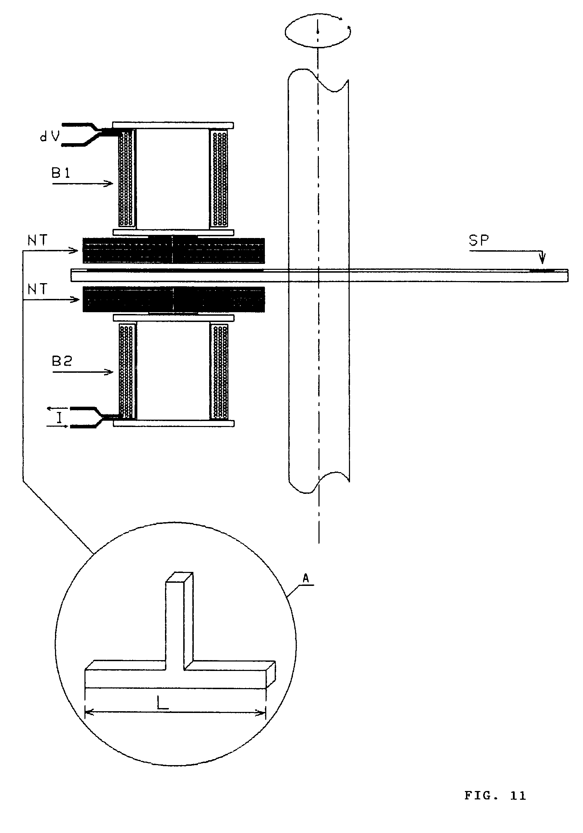

With reference to fig. 11, the diversified embodiment consists of two coils B1 and B2, winded up on a high magnetic permeability T-shaped core NT, as in evidence in the detail marked with the letter A.

The horizontal portion of the T-shaped core protrudes out of each coil winding; between the two coils there is a fixed gap to allow the free rotation of the substrate carrying the etched spiral line or the multilayer spiral lines package SP.

The horizontal portion of the T-shaped core has the direction of one spiral SP radius and a length L equal to the spiral maximum width.

When in one of the two coils, in the example B2, is circulating a time-variable current I, precisely a pulsed current like in the previous case described in the fig. 10, in the second coil, in the example B1, is produced an induced current or an induced electromotive force dV, depending on the coil B1 output terminals short or open circuit connection.

This same electromagnetic induction phenomenon induce a current also in the spiral lines or in the spiral lines package; the induced current intensity is yet depending on the width W of that spiral portion present in the gap between the two T-shaped cores, as well as on the characteristics of the inducing pulsed current I, and on the two coils windings. Or indeed the linked magnetic field produced by the induced current circulating in the plane spiral line preserves the characteristics of dependence from the shape of the plane conductive line object of the present invention. The phenomenon has been verified measuring the induced electromotive force at the output terminals of the spiral line or of the spiral lines package SP.

As the linked magnetic field, due to the current induced in the plane spiral, is in opposition to the first coil inducing field, in the example B2, the magnetic field inducing a current or an electromotive force in the second coil, in the example B1, is reduced in magnitude by a quantity proportional to the width W of that spiral portion present in the gap between the two T-shaped cores.

As a consequence, the electromotive force induced in the second coil B1, is dependent on the spiral width exactly as in the previous described cases and object of the present invention. By shaping opportunely the plane conductive line or the lines in the case of the multilayer package SP, the outline of the induced electromotive force dV at the output terminals of the second coil B1, is linear versus the angular rotational displacement of the spiral or of the packed spiral plane lines. A simple electronic circuit then transforms the pulsed output signal into a continuous one.

This sensor configuration has many advantages compared with the previous described realizations:
- signal level is higher and in the electronic circuitry a further signal amplification is not necessary;
- the conducting wires to the spiral terminals are removed; as a consequence the spiral can rotate full turns freely on its central pivot, allowing the use of this device also as a revolution counter, obviously with a suitable electronic circuitry whose embodiment is not a problem for the skilled in the art;
- the coils are simple to manufacture and the magneto-sensitive probes are not necessary;
- the receiver coil can have a double independent winding, allowing the realization of an angular sensor with two independent outputs at a little raised manufacturing cost.

To produce the conductive film line with the desired shape, it is possible to use both the printed circuits technology, the hybrid and the semiconductor circuits technologies, depending on the type of substrate and on the materials used as conductor, e.g.: metals, thick films, conductive polymers, metallo-organic materials, superconductors etched on the known and used substrates, like FR4, kapton, silicon, alumina, aluminum nitride, glass, ferrite etc.; as insulating material between the conductive spiral lines, it is possible to use dielectric materials, like $SiO2$, silicon nitride, polyimide, $Al2O3$ etc.; the limitation of the multilayer spiral conductive lines being the layers number that it is possible to obtain, the power dissipation, the production cost and the performances needed.

Typically it is possible to use printed circuit multilayers, thin or thick film multilayers, ceramic High firing or low firing multilayers (Green tape, tape on substrate) etc.

## Claims

1. A method to transduce and detect a spatial position by means of magnetic field measurements, characterized in that the shape of a plane conductive line carrying electrical current is used to induce, in the spatial positions surrounding the conductive line, the said magnetic field, whose magnitude changes in connection with the said shape of the conductive line, so that a spatial position to be measured is correlated with the magnitude variations of the said magnetic field, thereby the said spatial position is detected by means of the relative mechanical displacement between conductive line and magneto-sensitive measuring means.

2. A method to transduce and detect a spatial position by means of magnetic field measurements as in claim 1, characterized in that the current flowing in the said plane conductive line is a continuous or pulsed current and is supplied by means of electrical conducting means or induced by means of electromagnetic induction phenomenon.

3. A method to transduce and detect a spatial position by means of magnetic field measurements as in claim 1, characterized in that to the said position to be measured is brought back the measurement of the variations of a physical quantity, directly or through mechanical transduction, by determining the shape of the said conductive line.

4. A method to transduce and detect a spatial position by means of magnetic field measurements as in claim 3, characterized in that the shape of the said conductive line is defined in relation to the shape it would have when the variation of the said physical quantity to be measured is linear.

5. A device to transduce and detect a spatial position by means of magnetic field measurements, characterized in that it consists of:
- a plane conductive line carrying electrical current, wherein the shape changes along its length so that in the space surrounding the conductive line a magnetic field is induced, whose magnitude is proportional to the said position;
- magnetic field measuring means, which, at a constant non zero distance from the conductive line, scan its length in relation to the said position to be detected, and furnish an output signal directly proportional to the said position.

6. A device to transduce and detect a spatial position as in claim 5, characterized in that the said plane conductive line consists in a conductive film on a insulating substrate wherein the said shape is defined by means of its width, whose value is proportional to the said position.

7. A device to transduce and detect a spatial position as in claim 6, characterized in that the said film structure is a spiral (SP) whose width has an epicycloidal outline, and in that the displacement of the said measuring means (D) consists in a revolving displacement of the said spiral on its central axis, so that the position to be detected is brought back to a rotational angle measurement.

8. A device to transduce and detect a spatial position as in claim 6, characterized in that the said film structure is a couple of equal spirals (SP1,SP2) whose width has an epicycloidal outline, rotated of 180° to each other, and in which the electrical current circulates in opposite directions in each other.

9. A device to transduce and detect a spatial position as in claim 6, characterized in that the said film structure is a package of equal spirals, whose width has an epicycloidal outline, consisting of two equal groups, each group having its relative spirals connected in series to carry the electrical current and being superposed to each other, being a group rotated of 180° with respect to the other, and circulating the electrical current in opposite directions in the two groups.

10. A device to transduce and detect a spatial position as in claims 8 or 9, characterized in that the said measuring means consist of two equal measuring devices (D1, D2), each in corrispondence or facing the respective spiral or spiral group, the displacement of the said measurement means consisting of a revolving displacement of the said spiral couple or of the said spiral package on their respective central axis, so that the position to be detected is brought back to a rotational angle measurement given by the difference of the output signals furnished by the said two devices.

11. A device to transduce and detect a spatial position as in any of claims from 7 to 9, characterized in that the electrical current is generated in the said spiral lines by means of the electromagnetic induction phenomenon, from a first coil (B2) wherein a time variable current is flowing, and the said measuring means consist of a second coil (B1), and in that the said first and second coils are wounded on a T-shaped magnetic core (NT) having an end closed to the spiral lines without touching them, and whose width (L) is at the minimum equal to the maximum width of the said spiral lines.

12. A device to transduce and detect a spatial position as in claim 9, characterized in that the said spiral package is a multilayer structure having internal connections between the said spiral lines through integrated vias in the said multilayered structure, the said spiral lines being insulated from each other by means of a suitable layer of dielectric material.

13. A device to transduce and detect a spatial position as in claim 12, characterized in that the said multilayer spiral package has been realized by means of the printed circuits board technology or thin film or thick film technologies or is a ceramic High firing or Low firing multilayer.

14. A device to transduce and detect a spatial position as in any of claims from 5 to 13, characterized in that the measurement of the variations of a physical quantity is brought back to the said spatial position to be measured, directly or through a mechanical transducer, by means of a suitable definition of the shape of the said planar conductor, with reference to the shape that the conductive line has when the variation of the said physical quantity is linear.

Fig.1

Fig.2

Fig.3

Fig.4

Fig.6

Fig.5

EP 0 512 484 A1

Fig.7

Fig.8

Fig. 9

Fig. 10

dV

B 1

NT

NT

SP

B 2

I

A

L

FIG. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-2 522 807 (JAEGER SA)<br>* claim 1; figure 2 *<br>--- | 1-5 | G01D5/14 |
| Y | US-A-4 746 859 (KHALID MALIK)<br>* column 4, line 67 - column 5, line 8; figures 1,4 *<br>----- | 1-5 | |
| | | | TECHNICAL FIELDS SEARCHED (Int. Cl.5 ) |
| | | | G01D |

The present search report has been drawn up for all claims

| Place of search | Date of completion of the search | Examiner |
|---|---|---|
| THE HAGUE | 29 JULY 1992 | LUT K. |

EPO FORM 1503 03.82 (P0401)